# EUROPEAN PATENT APPLICATION

(11) **EP 2 348 475 A2**
(43) Date of publication of application: **27.07.2011**
(21) Application number: 10197356.8
(22) Date of filing: 30.12.2010
(51) Int. Cl.: G06Q 30/00

(54) **Advertisement management and display system**

(30) Priority: 30.12.2009 US 650338
(71) Applicant: Lungu, Emanuel, Boynton Beach, FL 33426 (US); Lungu, Daniel, Lake Worth, FL 33461 (US); Smith III, Arkley Warren, Loxahatchee, FL 33470 (US)
(72) Inventor: Lungu, Emanuel, Boynton Beach, FL 33426 (US); Lungu, Daniel, Lake Worth, FL 33461 (US); Smith III, Arkley Warren, Loxahatchee, FL 33470 (US)
(74) Representative: Style, Kelda Camilla Karen

(57) **Abstract**

An advertisement management and display system includes marketing management software, a client advertisements database communicating with the marketing management software, at least one table and at least one content display device carried by the at least one table and communicating with the marketing management software. The client advertisements database is adapted to store at least one advertisement, the marketing management software is adapted to receive the at least one advertisement from the client advertisements database and the at least one content display device is adapted to receive the at least one advertisement from the marketing management software and display the at least one advertisement. Artwork imagery is positioned about a periphery of a centrally located display for increasing patron traffic to the table.

## Description

### CROSS-REFERENCE TO RELATED APPLICATIONS

This Continuation-In-Part Application claims the benefit of co-pending United States Non-Provisional Patent Application Serial No. 12/113,185, filed on April 30, 2008, which is incorporated herein by reference in their entireties.

### BACKGROUND OF THE INVENTION

### Field of the Invention

The present invention relates generally to distribution and display of advertisements. More particularly, the present invention relates to an advertisement management and display system, which is adapted to electronically receive advertisements from one or multiple advertisers and display the advertisements on a table with electronic display capability.

### Background of the Invention

Broadcast programming is available through radio and television airwave broadcasts, cable providers, satellite transmissions and other communication channels. For years, televisions have provided viewers with a variety of entertainment, news, educational programs and advertisements. With the advent of personal computers and the Internet, these media have become almost universally available.

Advertisements for the goods or services of a business can be presented to potential customers by printing the advertisements on a substrate such as a newspaper, for example, or alternatively by displaying the advertisements via television programming during breaks in a broadcasted program, for example, or on a personal computer via the Internet. Advertisements on printed media are static and have a relatively limited capacity to engage the attention and interest of potential customers. On the other hand, advertisements which can be targeted to potential customers in an electronic format such as via television or Internet, for example, are dynamic and have a large capacity for customization as well as the ability to entertain while promoting goods or services.

An organic light emitting diode (OLED), also light emitting polymer (LEP) and organic electro luminescence (OEL), is a light-emitting diode (LED) whose emissive electroluminescent layer is composed of a film of organic compounds. The layer usually contains a polymer substance that allows suitable organic compounds to be deposited. They are deposited in rows and columns onto a flat carrier by a simple "printing" process. The resulting matrix of pixels can emit light of different colors.

Therefore, an advertisement management and display system that is adapted to display advertisements on a table with electronic display capability is needed.

### Summary of the Invention

The invention is directed to an advertisement management and display system. The advertisement management and display system is particularly adapted to electronically receive advertisements from one or multiple advertisers and display the advertisements on a table with electronic display capability. The table can be placed in a restaurant, cafeteria, mall, club, hospital waiting area, coffee shop, airport and other area in which persons stand or sit at a table in order to advertise goods and services to potential customers.

In one general aspect of the present invention, the advertisement management and display system may include:
marketing management software;
a client advertisements database communicating with the marketing management software;
at least one table; and
at least one content display device carried by the at least one table and communicating with the marketing management software. The client advertisements database is adapted to store at least one advertisement, the marketing management software is adapted to receive the advertisement or advertisements from the client advertisements database and the content display device or devices is/are adapted to receive the advertisement or advertisements from the marketing management software and display the advertisement or advertisements.

In a further aspect of the present invention, a marketing company may communicate with the marketing management software and may be adapted to modify the at least one advertisement.

In still a further aspect of the present invention, at least one advertiser may interface with the client advertisements database.

In another aspect of the present invention, the at least one content display device may include a plurality of content display devices.

In an additional aspect, the content display devices can be assembled beneath a clear tabletop. The content display devices can be placed parallel to the tabletop or at an acute angle from the tabletop.

In yet another aspect of the present invention, the at least one table may include a tabletop and a plurality of table legs extending from the tabletop and the at least one content display device may be carried by the tabletop.

In still another aspect of the present invention, the at least one table may include a tabletop and a central tabletop support extending from the tabletop and the at least one content display device may be carried by the tabletop.

In another aspect, the at least one content display device may include a display cavity provided in the at least one table; a display screen provided in the display cavity; a circuit board connected to the display screen; and a power cord connected to the circuit board.

In still another aspect, the display screen may include a touch-activated display screen.

In another aspect, a support tray may be carried by the at least one table.

In another aspect, artwork can be embedded in the interior or applied to underside of the tabletop, providing additional advertising or a means for attracting patrons to the table. The artwork can be applied via UV printing, digital printing, etching and the like, being applied to an underside of acrylic or glass. The artwork can be of any image, design, object, texture, finish, and the like. Images such as marketing prints can be provided to help promote a company. Textures or finishes such as marble, granite, wood, and the like can be applied to create a rich appearance.

In another aspect, the applied artwork can be protected by applying a cover coat, resin, ink, and the like to the underside of the tabletop after application of the artwork.

In yet another aspect, the tabletop can comprise a large display covering a majority of the tabletop surface area. The outer portion of the display can be utilized to present the artwork. A centrally positioned interior window can be provided for display a series of advertisements. The images in the interior window would be able to rotate such to be correctly oriented towards the viewer. The large display can be a common light-emitting diode (LED), an organic light emitting diode (OLED), a light emitting polymer (LEP) or an organic electro luminescence (OEL). Flexible displays can be provided for non-planar surfaces.

In another aspect, a Bluetooth or similar short range wireless communication system can be utilized to convey advertising information to a passing patron. The messages can be audio, video, text, or still images. The short range wireless communication can convey the message to a receiving device as the device passes the table, such as a mobile phone, laptop, Personal Data Assistant (PDA), and the like.

These and other aspects, features, and advantages of the present invention will become more readily apparent from the attached drawings and the detailed description of the preferred embodiments, which follow.

### Brief Description of the Drawings

The preferred embodiments of the invention will hereinafter be described in conjunction with the appended drawings provided to illustrate and not to limit the invention, where like designations denote like elements, and in which:

FIG. 1 is a perspective view of a table with electronic display capability which is suitable for implementation of an illustrative embodiment of the advertisement management and display system;

FIG. 2 is a schematic diagram of an advertisement management and display system;

FIG. 3 is a perspective view of an alternative embodiment of a table with electronic display capability which is suitable for implementation of an illustrative embodiment of the advertisement management and display system;

FIG. 4 is a perspective view of an alternative split-screen embodiment of a table with electronic display capability which is suitable for implementation of an illustrative embodiment of the advertisement management and display system;

FIG. 5 is a perspective view a multi-screen embodiment of a table with electronic display capability which is suitable for implementation of an illustrative embodiment of the advertisement management and display system;

FIG. 6 is a top view of the table with electronic display capability illustrated in FIG. 1;

FIG. 7 is a longitudinal sectional view, taken along section lines 7-7 in FIG. 6, of the table with electronic display capability;

FIG. 8 is a longitudinal sectional view of a table with electronic display capability having a magnified lens;

FIG. 9 is a top view of a table with electronic display capability with multiple, discrete advertisement display sections presented on the table with electronic display capability;

FIG. 10 is a perspective view of another illustrative embodiment of the table with electronic display capability, with a support tray provided on a tabletop of the table and various items supported by the support tray;

FIG. 11 is a perspective view of another illustrative embodiment of the table with electronic display capability, with a grid-type support tray provided on a tabletop of the table and various items supported by the support tray;

FIG. 12 is a schematic diagram of a control system which is suitable for implementation of an illustrative embodiment of the advertisement management and display system;

FIG. 13 is a perspective view of another illustrative embodiment of the table with electronic display capability, with a content display device illustrated in a pivoted configuration with respect to a tabletop;

FIG. 14 is a perspective view of a bar table embodiment of the table with electronic display capability;

FIG. 15 is a top planar view of advertisement management and display system table further illustrating a print impregnated tabletop;

FIG. 16 is a side sectional view taken along section 16--16 of FIG. 15, illustrating the print impregnated tabletop and an angled pair of displays; and

FIG. 17 is a top planar view of advertisement management and display system table further illustrating a peripheral artwork imagery display configuration.

Like reference numerals refer to like parts throughout the several views of the drawings.

### Detailed Description of the Invention

Shown throughout the Figures, the invention is directed to an advertisement management and display system which is adapted to receive advertisements from one or multiple advertisers and display the advertisements on a table with electronic display capability in order to advertise products and/or services offered by the advertisers to potential customers. The advertisement management and display system is particularly suitable for displaying advertisements on tables in restaurants, cafeterias, malls, clubs, hospital waiting areas, coffee shops, airports and other areas in which persons stand or sit at a table.

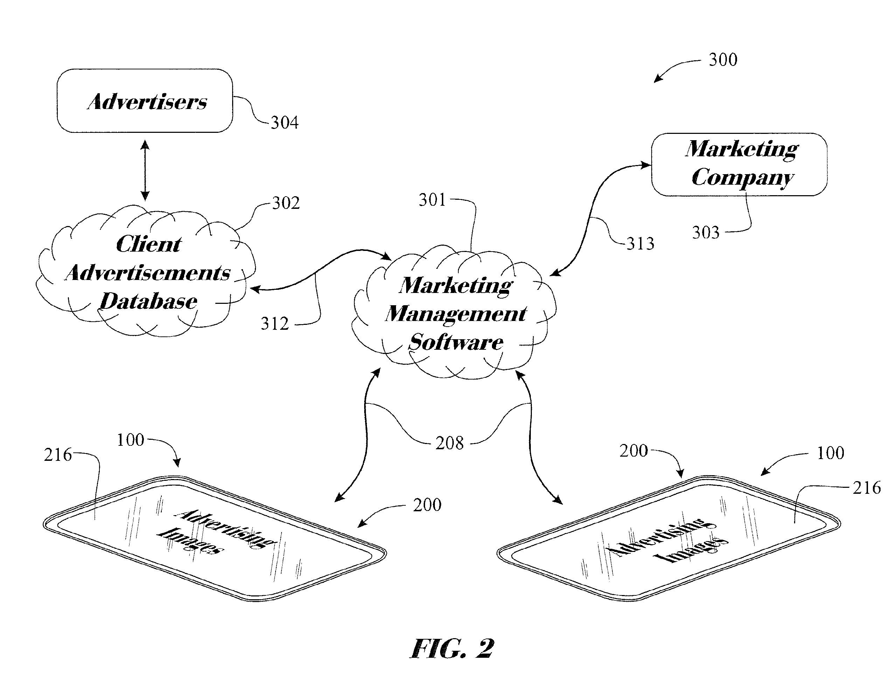

Referring initially to FIG. 2 of the drawings, an illustrative embodiment of the advertisement management and display system, hereinafter system is generally indicated by reference numeral 300. The system 300 includes marketing management software 301. A client advertisements database 302 interfaces with the marketing management software 301 through an information transfer pathway 312. At least one advertiser 304 communicates with the client advertisements database 302. Each advertiser 304 may be an entity, which offers goods and/or services to potential customers and which seeks to advertise those goods and/or services to the potential customers. In some embodiments, a marketing company 303 may interface with the marketing management software 301 through an information transfer pathway 313. Through an information transfer pathway 208, the marketing management software 301 interfaces with at least one table with electronic display capability 100, hereinafter table, which will be hereinafter described.

As will be hereinafter described, the table 100 may be placed in a restaurant, cafeteria, mall, club, hospital waiting area, coffee shop, airport or other area in which potential customers of the goods and/or services offered by the advertisers 304 stand or sit around the table 100. The advertisers 304 electronically store advertisements, which promote the goods and/or services offered by each advertiser 304 on the client advertisements database 302. The advertisements are transferred to the marketing management software 301 and ultimately, to the table 100, on which the advertisements are presented for the purpose of promoting those goods and/or services to the potential customers (not illustrated), as the potential customers stand or sit around the table 100.

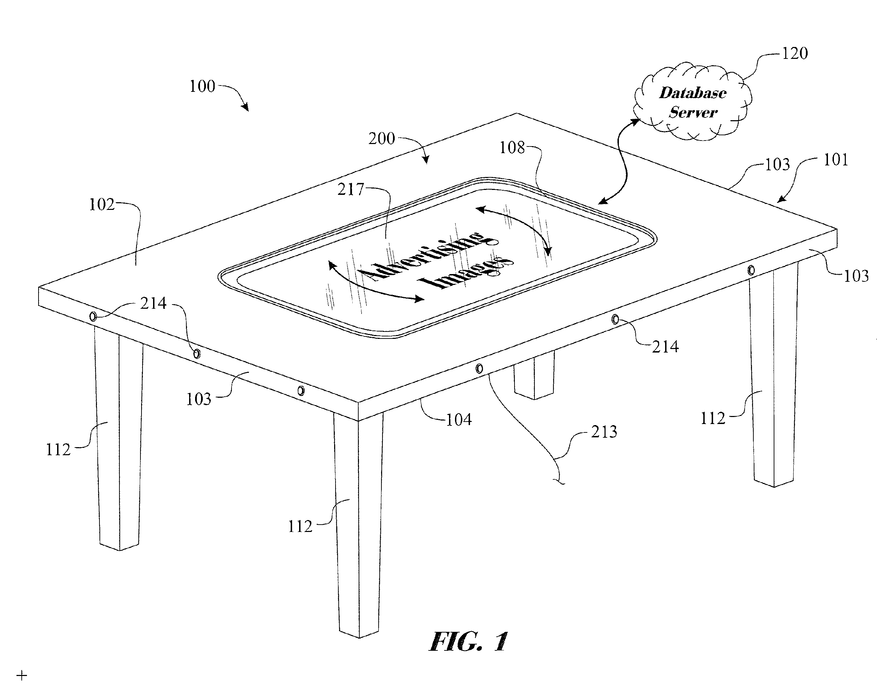

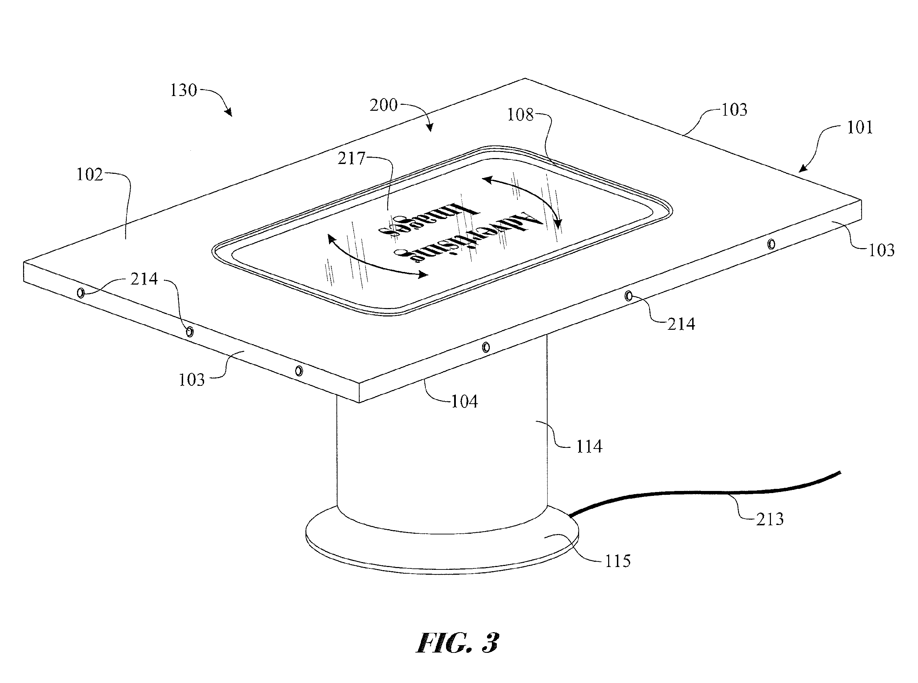

Referring next to FIGS. 1 and 3-8 of the drawings, various illustrative embodiments of the table are illustrated. A first illustrative embodiment of the table 100 is illustrated in FIGS. 1, 6 and 7. The table 100 includes a tabletop 101 which may have a generally elongated, rectangular configuration or other suitable alternative configuration such as triangular, octagonal or hexagonal, for example. The tabletop 101 may include a top surface 102; side surfaces 103 extending from the top surface 102; and a bottom surface 104 extending from the side surfaces 103 in generally parallel, spaced-apart relationship with respect to the top surface 102. Multiple table legs 112 may extend from the tabletop 101 to support the tabletop 101 on a floor or other support surface (not illustrated). As illustrated in FIG. 3, in an alternative illustrative embodiment of the table 130, a central tabletop support 114 extends downwardly from generally the center of the tabletop 101. A support base 115 may extend outwardly from the tabletop support 114 to stabilize the tabletop support 114 on the support surface (not illustrated). The table 100 can be constructed using any of a variety of materials including but not limited to wood, foam, laminate, stone, plastic and/or metal.

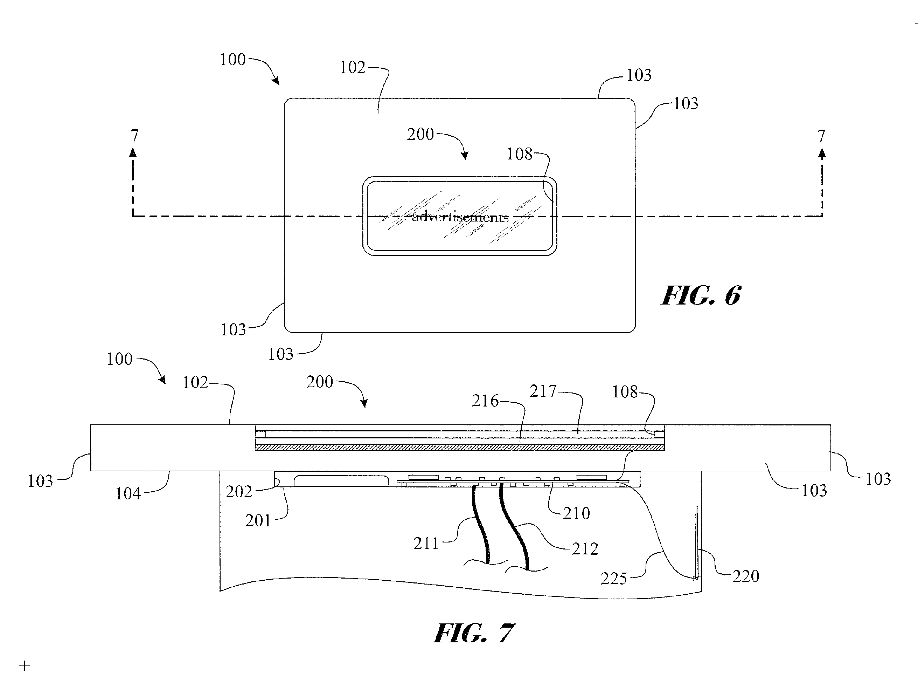

A content display device 200 is provided on the tabletop 101 of the table 100. As illustrated in FIG. 7, in some embodiments the content display device 200 may include a component compartment 201 which may be provided on or in the bottom surface 104 of the tabletop 101 or in any suitable alternative location. The component compartment 201 includes a component compartment interior 202 which is sized and configured to contain a circuit board 210 and other functional components of the content display device 200. A power cable 211 may be electrically connected to the circuit board 210 to supply electrical power to the circuit board 210. The power cable 211 may be connected to a power cord 213 (FIG. 1), which is adapted for connection to an electrical outlet (not illustrated). A data cable 212 may be connected to the circuit board 210 for electronic transfer of advertisement data to the circuit board 210, as will be hereinafter described.

A display cavity 108 may be provided in the top surface 102 of the tabletop 101. A display screen 216 of the content display device 200 is recessed in the display cavity 108. A transparent screen cover panel 217, which may be PLEXIGLAS (trademark) or other clear laminate, may be provided in the display cavity 108 over the display screen 216. In some embodiments, the display screen 216 may be flush with the top surface 102 of the tabletop 101. The display screen 216 may be mounted for selective removal from the tabletop 101. In some applications, the display screen 216 may be a touch-controlled display screen, whereby operation of the content display device 200 is facilitated by touching of the display screen 216. The display screen 216 may be an LCD (active matrix or passive matrix), an active matrix OLED or a passive matrix OLED, a CRT or a plasma screen and may be any of various sizes and shapes (square, round or panoramic, for example). In some applications, the plane of the display screen 216 may be disposed at a selected angle with respect to the plane of the top surface 102 of the tabletop 101. Images and information may be directly or indirectly applied to a non-exposed side of the transparent screen cover panel 217 as desired by the customer.

The data cable 212 (FIG. 7) is adapted for connection of the content display device 200 to the Internet and/or to one or multiple database servers 120 (FIG. 1). Additionally or alternatively, an antenna 220 may be connected to the circuit board 210 such as via antenna wiring 225. In the system 300, the data cable 212 and/or the antenna 220 define the links of communication between the content display device 200 and the corresponding information transfer pathway 208 (FIG. 2), which interfaces with the marketing management software 301. The antenna 220 is adapted to receive information wirelessly from the marketing management software 301 through the information transfer pathway 208.

A short range wireless communication system 256 can be utilized to convey advertising and other information to a passing patron. The messages can be audio, video, text, or still images. The short range wireless communication 256 can convey the message to a receiving device 250 as the device passes the table, such as a mobile phone, laptop, Personal Data Assistant (PDA), and the like. The receiving device 250 preferably comprises a display 252, a speaker (not identified), and a user operative interface 254. A short range wireless communication system 256 can utilize any reasonable protocol, such as Bluetooth. The interface provides various capabilities, including the ability for consumer to listen to the advertising or music while sitting at the table. The table 136 would recognize when a user is proximate the table 136 and would play ad or music directly to a consumer's Bluetooth headset, laptop, mobile phone, and the like.

The circuit board 210 includes the various components, which initiate and sustain operation of the content display device 200, according to technology that is well known by those skilled in the art. The circuit board 210 is adapted to receive the completed advertisements in electronic form from the marketing management software 301 through the information transfer pathway 208 (typically via the data cable 212 and/or the antenna 220) and display the advertisements on the display screen 216. Accordingly, the circuit board 210 may present the completed advertisements in the form of advertising images, for example, on the display screen 216 as illustrated in FIG. 1. The advertising images may correspond to photos or images of various products offered by an advertiser 304 (FIG. 2) in implementation of the system 300. The circuit board 210 may have the capability to run a flash application, which has the capability to continually update and display, completed advertisements on the display screen 216.

As illustrated in FIG. 1, the content display device 200 may include the capability to facilitate selective 180-degree rotation of the advertising images displayed on the display screen 216. This may be facilitated by touching of the display screen 216, for example. In some embodiments, multiple image orientation sensors 214 may be provided on the tabletop 101, such as along the side surfaces 103, for example. Each image orientation sensor 214 is connected to the circuit board 210 (FIG. 7) and is adapted to sense the position of a person or persons (not illustrated) sitting or standing adjacent to the table 100. Each image orientation sensor 214 provides input to the circuit board 210, which, in response, orients the advertising images displayed on the display screen 216 for proper observation by the person or persons.

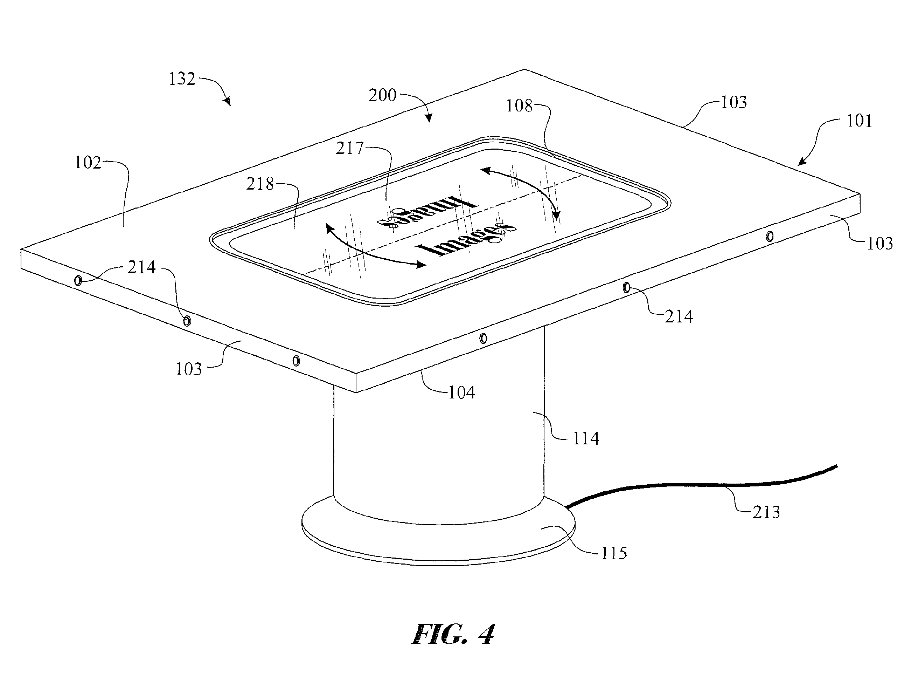

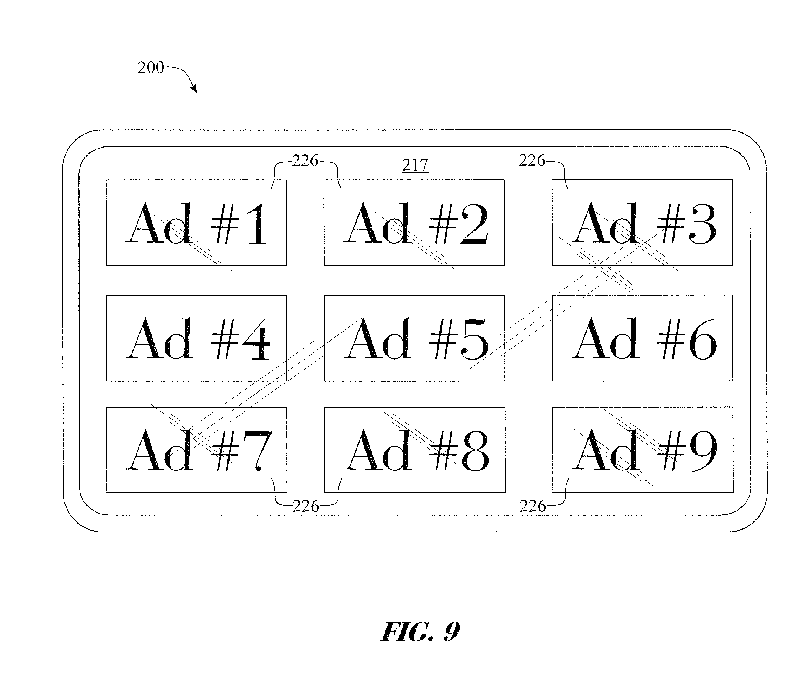

As illustrated in FIG. 4, in some embodiments of the system 132, the circuit board 210 (FIG. 7) of the content display device 200 may be adapted to present a split-screen image display configuration on the display screen 216 and may include a pair of screen sections 218 for this purpose. The respective screen sections 218 may be oriented to display discrete advertising images for viewing from opposite sides of the tabletop 101, for example. As illustrated in FIG. 9, in some applications the circuit board 210 (FIG. 7) of the content display device 200 may be adapted to present multiple advertisement display sections 226 on the display screen 216. In operation of the table 100, different advertisements can be simultaneously presented in the respective advertisement display sections 226.

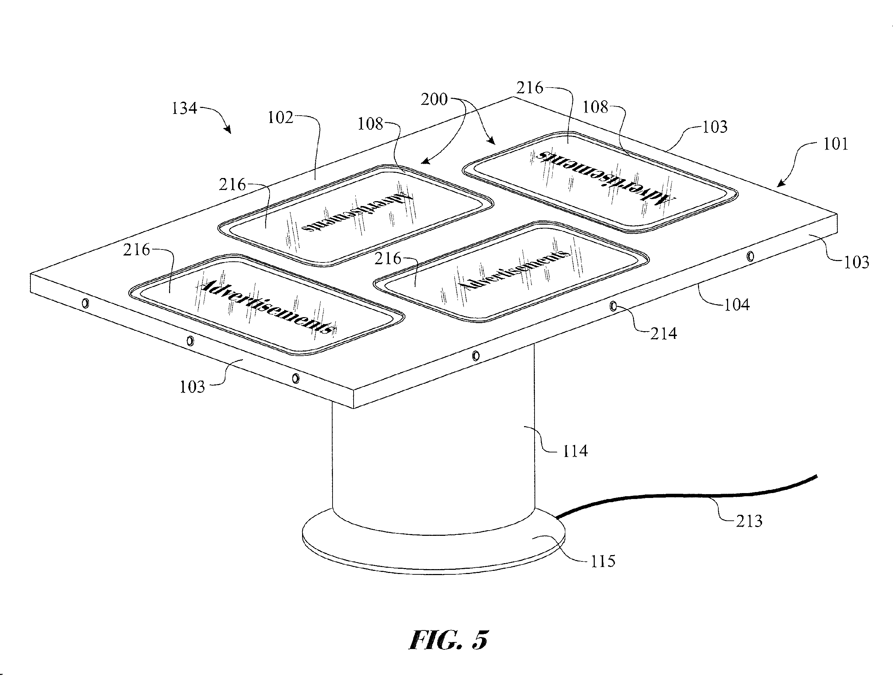

As illustrated in FIG. 5, in another illustrative embodiment of the table 134, multiple content display devices 200 are provided in the tabletop 101 in any desired orientation and pattern. In some embodiments, the content display devices 200 may be oriented in generally parallel relationship with respect to the respective side surfaces 103 of the tabletop 101. Accordingly, advertisements presented on the display screen 216 of each content display device 200 are oriented for proper observation by persons seated or standing at respective positions around the table 134.

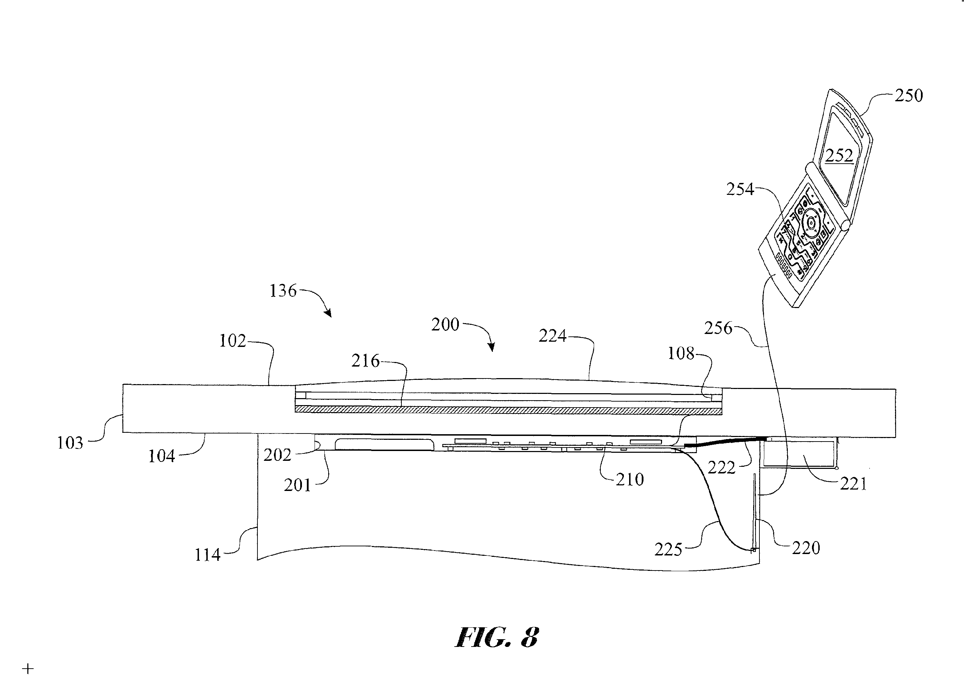

As illustrated in FIG. 8, in another illustrative embodiment of the table 136, a magnified lens 224 is provided in the display cavity 108, over the display screen 216. The magnified lens 224 is adapted to magnify advertising images displayed on the display screen 216. Additionally or alternatively, a battery 221, which may be rechargeable or disposable, is electrically connected to the circuit board 210 such as via battery wiring 222. The battery 221 is adapted to supply electrical power to the content display device 200. The battery 221 may be lithium, Ni-Mi, Ni-Cd or may be a direct methanol fuel cell or solar-powered, for example. The battery 221 may have the capability for remote charging using powercast technology. Access to various components, such as the battery 221, can be provided via a hinged and locked access means.

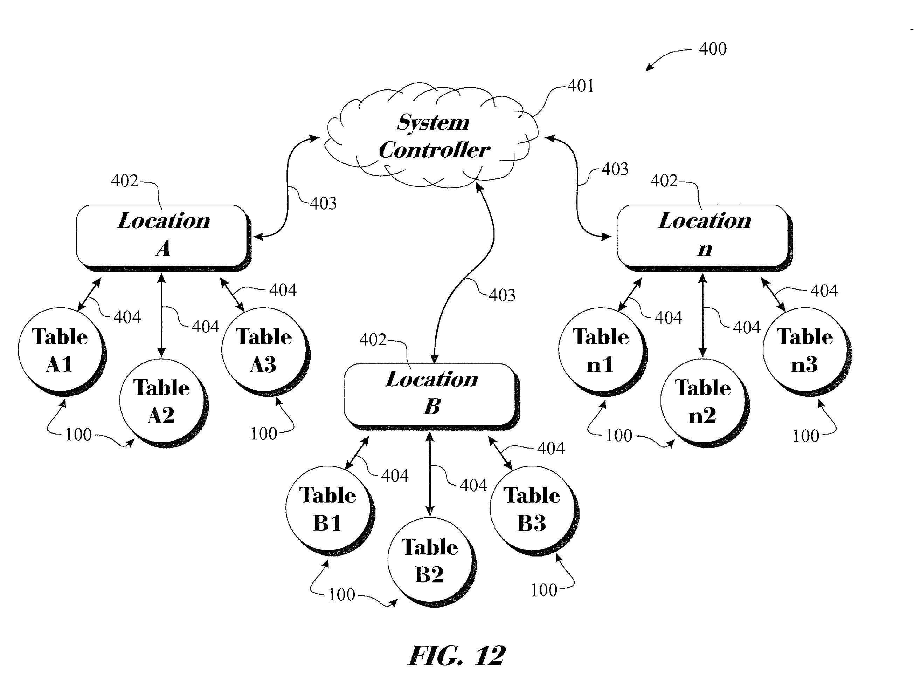

Referring next to FIG. 12 of the drawings, a suitable control system 400 for each of multiple tables 100 is illustrated. The control system 400 includes a system controller 401. Various local controllers 402 of the tables 100 may be arranged in different areas of the same building (not illustrated) or in different buildings, for example. The system controller 401 communicates with each local controller 402 through a corresponding system communication pathway 403. Through a corresponding local communication pathway 404, each local controller 402 communicates with the circuit board 210 (FIG. 7) of the content display device 200 on each table 100, which is controlled by that local controller 402. Through each local controller 402, the system controller 401 may be adapted to control such parameters as the content and/or order of advertisements presented on the display screen 216 (FIG. 7) of each table 100. The system controller 401 may be further adapted to control various aspects of the advertising images (such as brightness and contrast, for example), which are presented on the display screen 216.

Referring again to FIG. 2 of the drawings, in typical application of the system 300, each of multiple advertisers 304 who seek to display an advertisement or advertisements which relate to the products and/or services offered by one or more of the advertisers 304 subscribes to use the system 300 to advertise the goods and/or services to potential customers. One or multiple tables 100 is/are placed in a restaurant, cafeteria, mall, club, hospital waiting area, coffee shop, airport or other area in which potential customers will stand or sit around the table 100. The advertisements of the advertisers 304 are loaded in electronic form into the client advertisements database 302. The advertisements stored in the client advertisements database 302 may include such information as photos, images, descriptive text and/or videos which are directed to the products and/or services offered by each of the advertisers 304. The advertisements are transferred from the client advertisements database 302 to the marketing management software 301 through the information transfer pathway 312. In some embodiments, the marketing company 303 may augment, modify and/or edit the advertisements stored by the marketing management software 301 for marketing presentation purposes. The modified and/or edited and completed advertisements are transferred from the marketing management software 301, through each corresponding information transfer pathway 208 to the content display device 200 of the table 100 for display on the display screen 216 of the content display device 200. Accordingly, potential customers (not illustrated) of the goods and/or services offered by an advertiser 304 are seated or stand adjacent to the table 100 and can view the advertisement or advertisements on the display screen 216 of the content display device 200. In a restaurant setting, for example, the potential customers may be patrons of the restaurant who sit at the table 100 and view the advertisements while waiting for a dining order to be completed. In a college cafeteria setting, the table 100 can be a cafeteria tables in which multiple content display devices 200 are placed, as was heretofore described with respect to the table 134 illustrated in FIG. 5. Each content display device 200 may be used to display upcoming scholastic events, sports and announcements, for example.

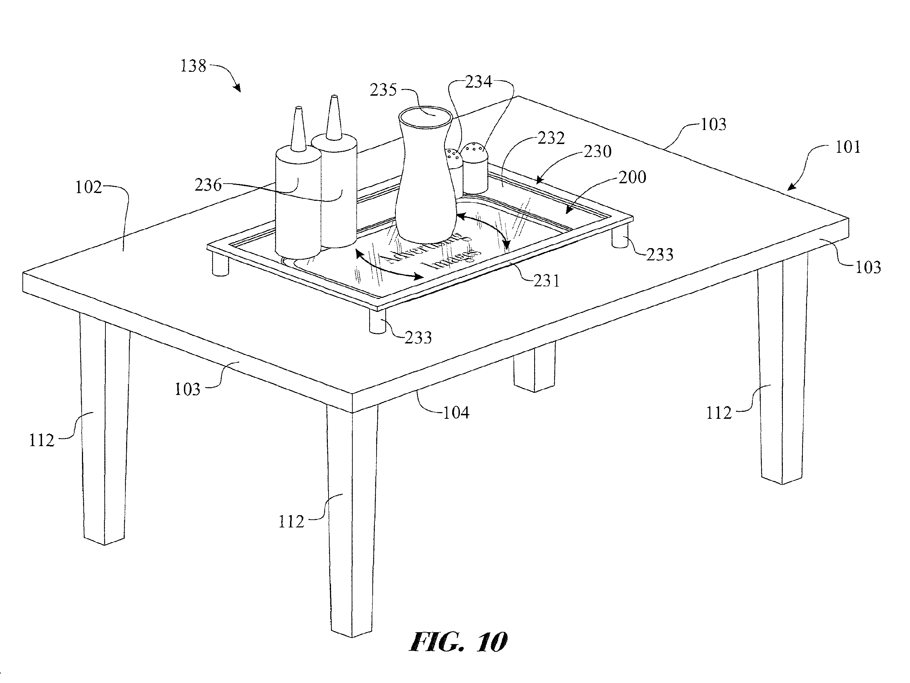

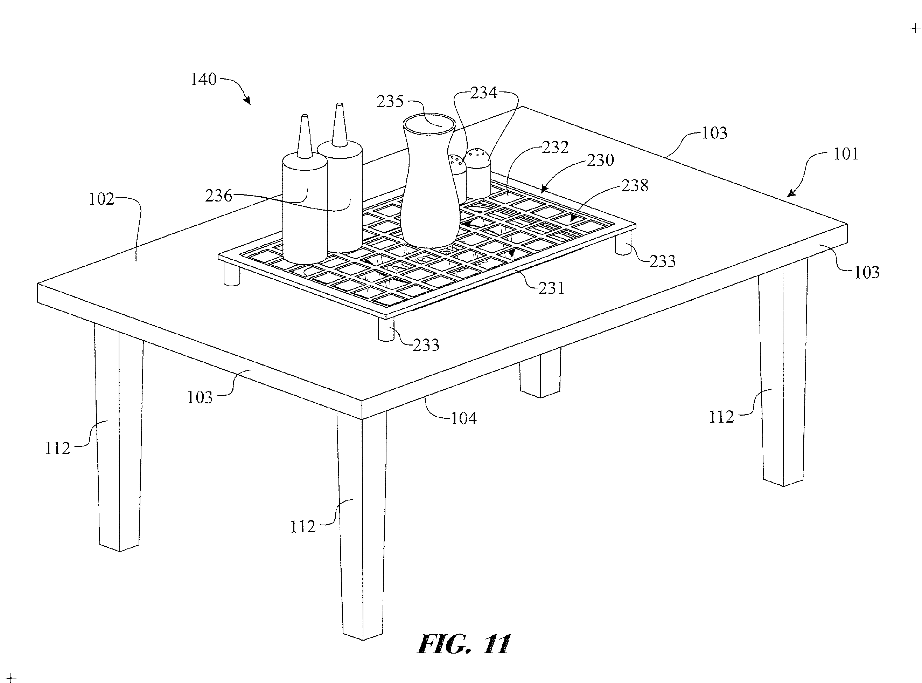

Referring next to FIGS. 10 and 11 of the drawings, still another illustrative embodiment of the system 138 (FIG. 10) includes a support tray 230 which is provided on the tabletop 101 of the table 100 to support various items such as salt and pepper shakers 234, a pitcher 235 and ketchup and mustard containers 236, for example. The support tray 230 may include a support tray frame 231. A solid transparent glass or plastic support tray panel 232 is supported by the support tray frame 231. Support tray legs 233 may extend from the support tray panel 232 to support the support tray 230 on the top surface 102 of the tabletop 101. In the embodiment of the system 140, which is illustrated in FIG. 11, a grid panel 238 is provided on the support tray frame 231 in place of the solid support tray panel 232 of the support tray 230 in FIG. 10.

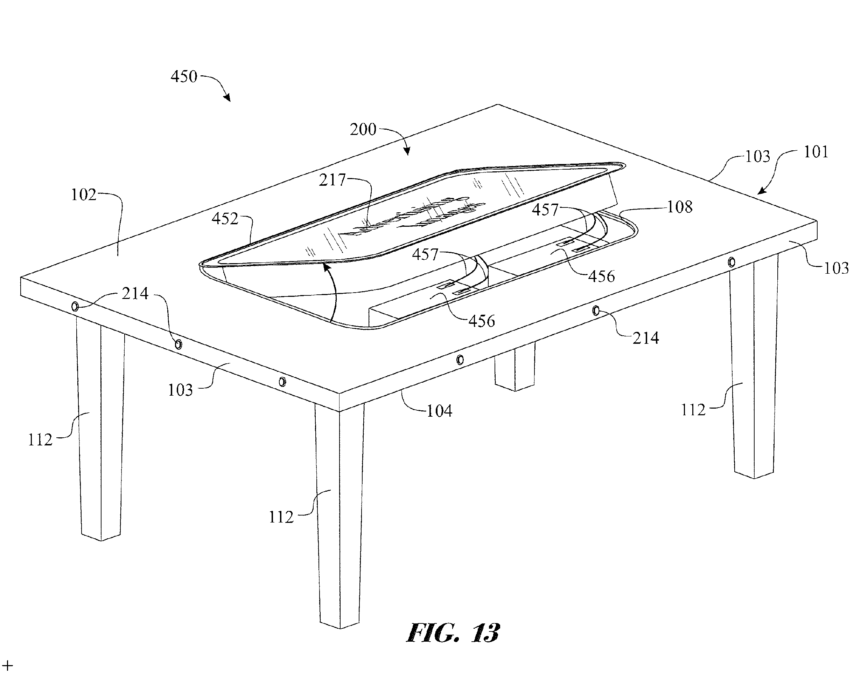

Referring next to FIG. 13 of the drawings, in yet another illustrative embodiment of the system 450, the content display device 200 is pivotally attached to an edge of the display cavity 108 along a display device hinge 452. Accordingly, the content display device 200 can be selectively pivoted to lie in the display cavity 108 such that the screen cover panel 217 is generally flush or coplanar with the tabletop 101. Alternatively, the content display device 200 can be selectively pivoted from the display cavity 108 such that the screen cover panel 217 is oriented at an angle with respect to the tabletop 101, as illustrated. This facilitates the viewing of images on the screen cover panel 217 by a person or persons (not illustrated) seated at an edge of the tabletop 101. Batteries 456 which are connected to the content display device 200 via battery wiring 457, as well as other components (not illustrated) of the content display device 200, may be accessed in the display cavity 108 for repair, replacement and/or maintenance purposes by pivoting the content display device 200 to the angled position illustrated in FIG. 13.

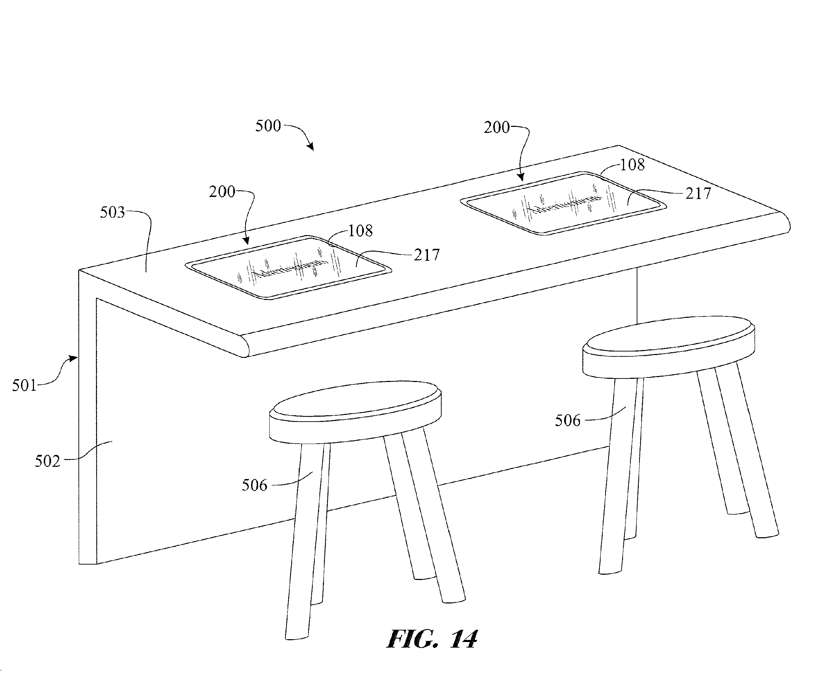

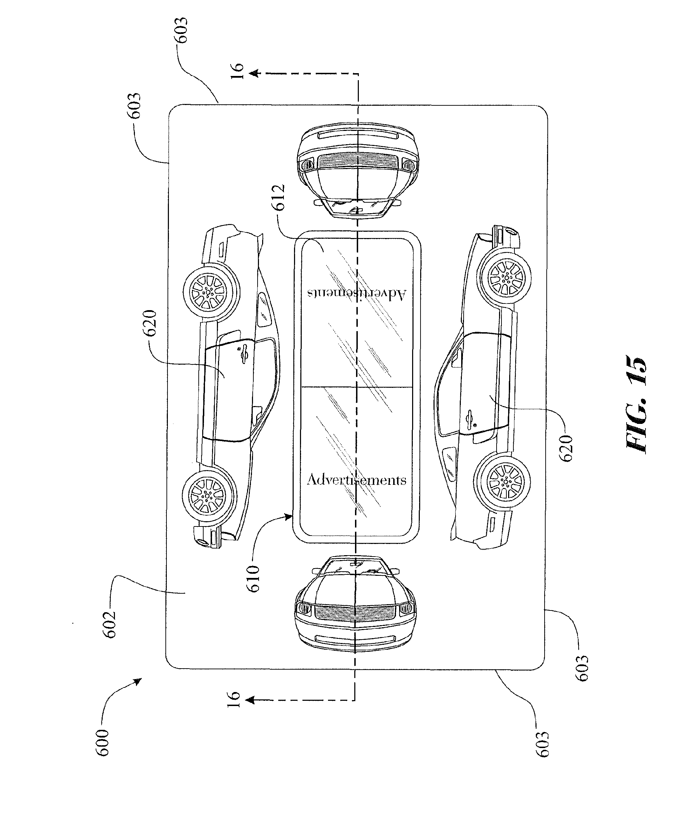

Referring next to FIGs. 14 and 15 of the drawings, in another illustrative embodiment of the system 500, a bar table 501 may include a vertical support 502 and a bar tabletop 503 which extends from the vertical support 502. At least one content display device 200 is provided in at least one display cavity 108 provided in the bar tabletop 503. In some embodiments, multiple content display devices 200 may be provided in spaced-apart relationship with respect to each other along the bar tabletop 503. Accordingly, patrons (not illustrated) may stand at the bar tabletop 503 or sit at respective bar stools 506 which are positioned at the respective content display devices 200 along the bar tabletop 503 and view advertisements which are displayed on the screen cover panel 217 of each content display device 200.

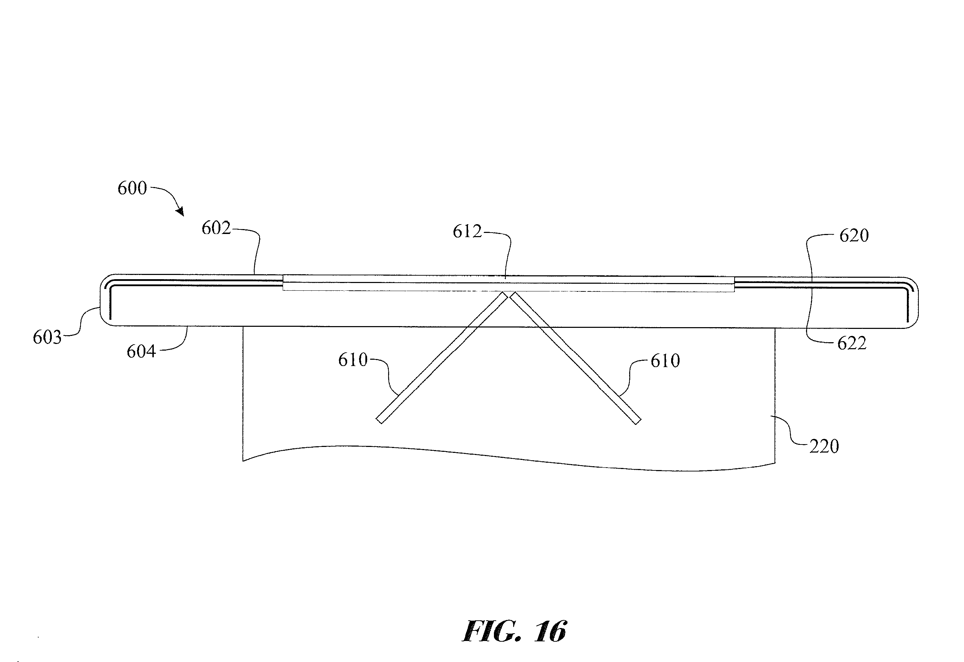

Referring next to FIGs. 15 and 16 of the drawings, an optional feature is integrated into a table 600. The table 600 is fabricated having the same basic table and system components as the table 100, 130. The table 600 is fabricated having a tabletop 602 defined by tabletop edge 603. The tabletop 602 is fabricated of a transparent material. Artwork imagery 620 can be embedded in an interior or applied to underside of the tabletop, providing additional advertising or a means for attracting patrons to the table. The artwork can be applied via UV printing, digital printing, etching and the like, being applied to the underside of the tabletop 602. The preferred tabletop 602 is of an acrylic or glass. The artwork can be of any image, design, object, texture, finish, and the like. Images such as marketing prints can be provided to help promote a company. Textures or finishes such as marble, granite, wood, and the like can be applied to create a rich appearance. The artwork imagery 620 can be protected via an application of an artwork protection layer 622, such as a cover coat, resin, ink, and the like to tabletop underside 604 after application of the artwork.

The table 600 can include any number of display screens 610. The content display devices 610 are located beneath the tabletop 602. A display screen 612 provides a level surface for the patron's use. In the exemplary illustration, a pair of display screens 610 being attached to the tabletop underside 604 at an acute angle to a display screen 612. The angled presentation increases the visibility of the displayed material to the patron. The display screen 612 can be inlayed, providing a flush surface with the tabletop 602.

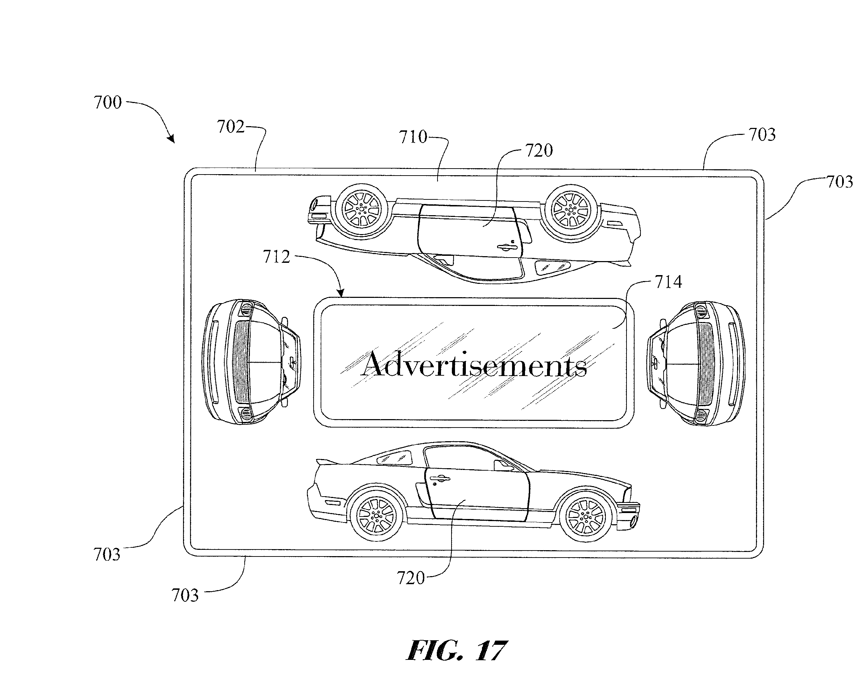

Referring next to FIG. 17 of the drawings, an alternate embodiment referred to as a table 700, utilizes a table-sized display 710 for presentation of peripheral artwork 720. A tabletop 702 can comprise a table-sized display 710 covering a majority of the tabletop 702 surface area. The outer portion of the display can be utilized to present the peripheral artwork 720. A centrally positioned interior display window 712 can be provided for display a series of advertisements 714. The advertisements 714 presented in the interior window would be able to rotate such to be correctly oriented towards the viewer. Alternately, the advertisements 714 can be displayed in a segmented window, each segment oriented towards the respective table edge 703. The table-sized display 710 can be a common light-emitting diode (LED), an organic light emitting diode (OLED), a light emitting polymer (LEP) or an organic electro luminescence (OEL). Flexible displays can be provided for non-planar surfaces.

While the preferred embodiments of the invention have been described above, it will be recognized and understood that various modifications can be made in the invention and the appended claims are intended to cover all such modifications which may fall within the spirit and scope of the invention.

## Claims

1. An advertisement management and display system, comprising:
marketing management software;
a client advertisements database communicating with said marketing management software;
at least one table, said table comprising a tabletop having a centrally positioned window for displaying a series of advertisements in accordance with the marketing management software and an artwork image disposed about a periphery of the centrally positioned window;
at least one content display device carried by said at least one table and communicating with said marketing management software; and
wherein said client advertisements database is adapted to store at least one advertisement, said marketing management software is adapted to receive said at least one advertisement from said client advertisements database and said at least one content display device is adapted to receive said at least one advertisement from said marketing management software and display said at least one advertisement.

2. An advertisement management and display system as recited in claim 1, wherein the tabletop is of a transparent material having said peripheral artwork imagery disposed upon an underside of the tabletop, wherein preferably the artwork is protected via a protection layer applied to the underside of the tabletop.

3. An advertisement management and display system as recited in claims 1 or 2, wherein the content display device is proximate the size of the tabletop, wherein the content display device is segmented into said centrally positioned window and a peripheral display,
the interior display window being used for presentation of the series of advertisements; and
the peripheral display being used for presentation of peripheral artwork imagery.

4. An advertisement management and display system as recited in claims 1 to 3, the system comprising at least at least two content display devices, each content display device being disposed at an acute angle respective to the tabletop, being angled to project the image towards a proximate table edge for improved viewing by a patron.

5. An advertisement management and display system as recited in claims 1 to 4, the system further comprising a short range wireless communication system and respective software for conveying information to a receiving device, wherein preferably the system further comprises a proximity sensor, wherein the short range wireless communication system transmits said information upon indication of an object passing by said proximity sensor.

6. An advertisement management and display system, comprising:
marketing management software;
a client advertisements database communicating with said marketing management software;
at least one table, said table comprising a transparent tabletop having a centrally positioned window for displaying a series of advertisements in accordance with the marketing management software and an artwork image disposed upon an underside of the transparent tabletop about a periphery of the centrally positioned window;
at least one content display device carried by said at least one table and communicating with said marketing management software; and
wherein said client advertisements database is adapted to store at least one advertisement, said marketing management software is adapted to receive said at least one advertisement from said client advertisements database and said at least one content display device is adapted to receive said at least one advertisement from said marketing management software and display said at least one advertisement.

7. An advertisement management and display system as recited in claim 6, wherein the artwork is at least one of UV printed, digitally printed, and etched.

8. An advertisement management and display system as recited in claims 6 or 7, wherein the artwork is protected via a protection layer applied to the underside of the tabletop.

9. An advertisement management and display system as recited in claims 6 to 8, the system comprising at least at least two content display devices, each content display device being disposed at an acute angle respective to the tabletop, being angled to project the image towards a proximate table edge for improved viewing by a patron.

10. An advertisement management and display system as recited in claims 6 to 9, the system further comprising a short range wireless communication system and respective software for conveying information to a receiving device, wherein preferably the system further comprises a proximity sensor, wherein the short range wireless communication system transmits said information upon indication of an object passing by said proximity sensor.

11. An advertisement management and display system as recited in claims 6 to 10, wherein said at least one content display device comprises a display cavity provided in said table, a display screen provided in said display cavity, a circuit board connected to said display screen and a power cord connected to said circuit board.

12. An advertisement management and display system, comprising:
marketing management software;
a client advertisements database communicating with said marketing management software;
at least one table, said table comprising a tabletop having a centrally positioned window for displaying a series of advertisements in accordance with the marketing management software and an artwork image disposed about a periphery of the centrally positioned window;
at least one content display device carried by said at least one table and communicating with said marketing management software, wherein the at least one content display device is segmented to display said series of advertisements in each segment said advertisements being oriented for proper reading along a proximate table edge; and
wherein said client advertisements database is adapted to store at least one advertisement, said marketing management software is adapted to receive said at least one advertisement from said client advertisements database and said at least one content display device is adapted to receive said at least one advertisement from said marketing management software and display said at least one advertisement.

13. An advertisement management and display system as recited in claim 12, wherein the tabletop is of a transparent material having said peripheral artwork imagery disposed upon an underside of the tabletop.

14. An advertisement management and display system as recited in claims 12 to 13, wherein the content display device is proximate the size of the tabletop, wherein the content display device is segmented into said centrally positioned window and a peripheral display,
the interior display window being used for presentation of the series of advertisements; and
the peripheral display being used for presentation of peripheral artwork imagery.

15. An advertisement management and display system as recited in claims 12 to 14, the system comprising at least at least two content display devices, each content display device being disposed at an acute angle respective to the tabletop, being angled to project the image towards a proximate table edge for improved viewing by a patron.

16. An advertisement management and display system as recited in claims 12 to 15, the system further comprising a short range wireless communication system and respective software for conveying information to a receiving device, wherein preferably the system further comprises a proximity sensor, wherein the short range wireless communication system transmits said information upon indication of an object passing by said proximity sensor.
